# EUROPEAN PATENT APPLICATION

(11) **EP 4 797 517 A1**
(43) Date of publication of application: **26.08.2026**
(21) Application number: 24895982.7
(22) Date of filing: 29.09.2024
(51) Int. Cl.: H02M 1/32

(54) **ACTIVE CLAMP CIRCUIT, CONVERTER AND POWER SUPPLY**

(30) Priority: 29.11.2023 CN 202311632526
(71) Applicant: HUAWEI TECHNOLOGIES CO., LTD., Shenzhen 518129 (CN)
(72) Inventor: WU, Liang, Shenzhen, Guangdong 518129 (CN); HE, Zuwei, Shenzhen, Guangdong 518129 (CN)
(74) Representative: Maiwald GmbH
(86) International application number: PCT/CN2024/122292
(87) International publication number: WO 2025/112887

(57) **Abstract**

An active clamp circuit is disclosed, including a first energy storage element, a first branch, and a second branch. The first branch and the second branch are connected in parallel and then connected in series to the first energy storage element. The first branch includes a second energy storage element, and the second branch includes an auxiliary switching transistor. When the clamp circuit is in a forward charging state, the first energy storage element and the first branch conduct to form a clamping loop, and the first energy storage element and the second energy storage element absorb leakage inductance energy of a primary-side winding through the clamping loop. When the clamp circuit is in a state of energizing a transformer through reverse excitation, the first energy storage element and the second branch conduct to form a reverse excitation loop. In this application, during forward charging of the clamp circuit, a voltage between two ends is a sum of voltages of the first energy storage element and the second energy storage element, and during discharging, a voltage between the two ends is only a voltage of the first energy storage element. During reverse excitation for the transformer, an excitation voltage is lower than a reflected voltage of a secondary-side winding, so that a secondary-side rectifier is not turned on. This eliminates forward excitation of energy to a secondary side, and therefore reduces loss.

## Description

This application claims priority to Chinese Patent Application No. 202311632526.7, filed with the China National Intellectual Property Administration on November 29, 2023 and entitled "ACTIVE CLAMP CIRCUIT, CONVERTER, AND POWER SUPPLY", which is incorporated herein by reference in its entirety.

### TECHNICAL FIELD

This application relates to the field of power electronics technologies, and specifically, to an active clamp circuit, a converter, and a power supply.

### BACKGROUND

In an alternating current-direct current power supply, a flyback circuit is usually used to obtain higher power density and higher conversion efficiency. A switching transistor in a conventional flyback circuit usually operates in a hard switching state, leading to large switching loss and capacitive loss, and the loss increases with an increase in an operating frequency. Compared with the conventional flyback circuit, an active clamp flyback (Active Clamp Flyback, ACF) circuit can implement zero voltage switching (Zero Voltage Switching, ZVS) of a switching transistor, and can also recycle leakage inductance energy, to significantly improve conversion efficiency while implementing high-frequency operation. The ACF circuit may be classified into complementary active clamp flyback and non-complementary active clamp flyback based on control logic of an auxiliary switching transistor (also referred to as an auxiliary switching transistor) and a primary power switching transistor (also referred to as a primary power switching transistor). A difference lies in a drive waveform of an upper primary power switching transistor. In the complementary active clamp flyback, drive waveforms of upper primary power switching transistors are complementary, and there is dead time between the auxiliary switching transistor and the primary power switching transistor. In the non-complementary active clamp flyback, only a short-time pulse is enabled for the auxiliary switching transistor, to create a condition for ZVS of the primary power switching transistor.

In the conventional technology, compared with a conventional flyback circuit, the active clamp circuit additionally includes a clamp capacitor. Before the primary power switching transistor is turned on, a current in a reverse direction flows through an excitation inductor. After the auxiliary switching transistor is turned off, a negative current of the excitation inductor enables a junction capacitor of the primary power switching transistor to discharge. When a voltage of the primary power switching transistor decreases to 0, the primary power switching transistor is turned on, to implement ZVS switching and reduce switching loss.

However, when the primary power switching transistor is on, because a voltage of the clamp capacitor is higher than a secondary-side reflected voltage of a transformer, a secondary-side SR is turned on, and energy of the clamp capacitor is transferred to an output side through the transformer, leading to a large current and large loss.

### SUMMARY

According to a first aspect, this application provides an active clamp circuit. The clamp circuit and a primary power switching transistor are connected in parallel and then connected to a primary-side winding of a transformer. The clamp circuit includes a first energy storage element, a first branch, and a second branch. The first branch and the second branch are connected in parallel and then connected in series to the first energy storage element. The first branch includes a second energy storage element, and the second branch includes an auxiliary switching transistor. The first energy storage element and the first branch conduct to form a clamping loop, and the first energy storage element and the second energy storage element absorb leakage inductance energy of the primary-side winding through the clamping loop after the primary power transistor is turned off. When the first energy storage element and the second branch conduct to form a reverse excitation loop, the first energy storage element discharges when the auxiliary switching transistor is turned on, to energize the transformer through reverse excitation.

During forward charging of the clamp circuit (in other words, when the primary power transistor is turned off), a voltage between two ends is a sum of voltages of the first energy storage element and the second energy storage element, and during discharging, a voltage between the two ends is only a voltage of the first energy storage element. During reverse excitation for the transformer, an excitation voltage is lower than a reflected voltage of a secondary-side winding, so that a secondary-side rectifier is not turned on. This eliminates forward excitation of energy to a secondary side, and therefore reduces loss.

In a possible implementation, the first branch further includes a first diode, the first diode is connected in series between the first energy storage element and the second energy storage element, the second branch further includes a second diode, and the second diode is connected in series between the first energy storage element and the auxiliary switching transistor.

In a possible implementation, an anode of the first diode is connected to the first energy storage element, a cathode of the first diode is connected to the second energy storage element, and the first diode is configured to block the first energy storage element from releasing energy (to be specific, block a reverse current relative to the first diode from flowing to the first energy storage element).

In a possible implementation, an anode of the second diode is connected to the auxiliary switching transistor, a cathode of the second diode is connected to the first energy storage element, and the second diode is configured to block the first energy storage element from storing energy (to be specific, block a reverse current relative to the second diode from flowing to the auxiliary switching transistor).

In a possible implementation, when the clamp circuit is in a forward clamping state (which may also be referred to as a forward charging state), a clamping voltage of the primary switching transistor is a sum of voltages of the first energy storage element and the second energy storage element.

In a possible implementation, the clamp circuit further includes a controller, the controller is connected to the primary power switching transistor and the auxiliary switching transistor, and the controller is configured to sequentially perform the following operations:
when the primary power switching transistor and the auxiliary switching transistor are in an off state and a voltage between two ends of the primary power switching transistor decreases to 0, switching the primary power switching transistor to an on state, to allow a current passing through a primary power loop to flow, where the primary power loop includes the primary-side winding and the primary power switching transistor;
after a first time period elapses after the primary power switching transistor is switched to the on state, switching the primary power switching transistor from the on state to an off state, and after dead time, switching the auxiliary switching transistor from the off state to an on state, to allow a current passing through a clamping loop to flow, and allow the first energy storage element and the second energy storage element to absorb leakage inductance energy of the transformer through the clamping loop, where the clamping loop includes the primary-side winding, the first energy storage element, and the second energy storage element; and
when a current flowing through the primary-side winding changes to 0, switching the auxiliary switching transistor from the on state to an off state, and after a second time period, switching the auxiliary switching transistor to an on state, to allow a current passing through a reverse excitation loop to flow, and allow the first energy storage element to energize the transformer through reverse excitation via the reverse excitation loop, where the reverse excitation loop includes the first energy storage element, the primary-side winding, and the auxiliary switching transistor.

In a possible implementation, the controller is further configured to switch the primary power switching transistor to an on state based on a degree of energizing the transformer by the first energy storage element through reverse excitation, to implement zero voltage switching.

In a possible implementation, the first energy storage element is a capacitor, and the second energy storage element is a capacitor or a primary-side auxiliary winding.

According to a second aspect, this application provides a control method, applied to a controller in an active clamp circuit. The clamp circuit and a primary power switching transistor are connected in parallel and then connected to a primary-side winding of a transformer. The clamp circuit includes a first energy storage element, a first branch, and a second branch. The first branch and the second branch are connected in parallel and then connected in series to the first energy storage element. The first branch includes a second energy storage element, and the second branch includes an auxiliary switching transistor. The controller is connected to the primary power switching transistor and the auxiliary switching transistor. The method includes: when the primary power switching transistor and the auxiliary switching transistor are in an off state and a voltage between two ends of the primary power switching transistor decreases to 0, switching the primary power switching transistor to an on state, to allow a current passing through a primary power loop to flow, where the primary power loop includes the primary-side winding and the primary power switching transistor; after a first time period elapses after the primary power switching transistor is switched to the on state, switching the primary power switching transistor from the on state to an off state, and after dead time, switching the auxiliary switching transistor from the off state to an on state, to allow a current passing through a clamping loop to flow, and allow the first energy storage element and the second energy storage element to absorb leakage inductance energy of the transformer through the clamping loop, where the clamping loop includes the primary-side winding, the first energy storage element, and the second energy storage element; and when a current flowing through the primary-side winding changes to 0, switching the auxiliary switching transistor from the on state to an off state, and after a second time period, switching the auxiliary switching transistor to an on state, to allow a current passing through a reverse excitation loop to flow, and allow the first energy storage element to energize the transformer through reverse excitation via the reverse excitation loop, where the reverse excitation loop includes the first energy storage element, the primary-side winding, and the auxiliary switching transistor.

In a possible implementation, the method further includes: switching the primary power switching transistor to an on state, and switching the auxiliary switching transistor to an off state, to allow a current passing through a primary power loop to flow, where the primary power loop includes the primary-side winding and the primary power switching transistor.

In a possible implementation, the method further includes: switching the primary power switching transistor to an on state based on a degree of energizing the transformer by the first energy storage element through reverse excitation, to implement zero voltage switching.

In a possible implementation, the first energy storage element is a capacitor, and the second energy storage element is a capacitor or a primary-side auxiliary winding.

In a possible implementation, when the clamp circuit is in a forward charging state, the first energy storage element and the first branch conduct to form a clamping loop, and the first energy storage element and the second energy storage element absorb leakage inductance energy of the primary-side winding through the clamping loop.

In a possible implementation, when the clamp circuit is in a state of energizing the transformer through reverse excitation, the first energy storage element and the second branch conduct to form a reverse excitation loop.

In a possible implementation, the first branch further includes a first diode, the first diode is connected in series between the first energy storage element and the second energy storage element, the second branch further includes a second diode, and the second diode is connected in series between the first energy storage element and the auxiliary switching transistor.

In a possible implementation, an anode of the first diode is connected to the first energy storage element, a cathode of the first diode is connected to the second energy storage element, and the first diode is configured to block a reverse current relative to the first diode from flowing to the first energy storage element.

In a possible implementation, an anode of the second diode is connected to the auxiliary switching transistor, a cathode of the second diode is connected to the first energy storage element, and the second diode is configured to block a reverse current relative to the second diode from flowing to the auxiliary switching transistor.

In a possible implementation, when the clamp circuit is in a forward charging state, a clamping voltage of the primary switching transistor is a sum of voltages of the first energy storage element and the second energy storage element.

According to a third aspect, this application provides an active clamp flyback converter, including:
the active clamp circuit according to any one of the implementations of the first aspect and a transformer, where the clamp circuit and a primary power switching transistor are connected in parallel and then connected to a primary-side winding of the transformer.

According to a fourth aspect, this application provides a switching power supply, where the switching power supply includes the active clamp circuit according to any one of the implementations of the first aspect.

According to a fifth aspect, this application provides a controller, used in an active clamp circuit. The clamp circuit and a primary power switching transistor are connected in parallel and then connected to a primary-side winding of a transformer. The clamp circuit includes a first energy storage element, a first branch, and a second branch. The first branch and the second branch are connected in parallel and then connected in series to the first energy storage element. The first branch includes a second energy storage element, and the second branch includes an auxiliary switching transistor. The controller is connected to the primary power switching transistor and the auxiliary switching transistor. The controller is configured to: when the primary power switching transistor and the auxiliary switching transistor are in an off state and a voltage between two ends of the primary power switching transistor decreases to 0, switch the primary power switching transistor to an on state, to allow a current passing through a primary power loop to flow, where the primary power loop includes the primary-side winding and the primary power switching transistor; after a first time period elapses after the primary power switching transistor is switched to the on state, switch the primary power switching transistor from the on state to an off state, and after dead time, switch the auxiliary switching transistor from the off state to an on state, to allow a current passing through a clamping loop to flow, and allow the first energy storage element and the second energy storage element to absorb leakage inductance energy of the transformer through the clamping loop, where the clamping loop includes the primary-side winding, the first energy storage element, and the second energy storage element; and when a current flowing through the primary-side winding changes to 0, switch the auxiliary switching transistor from the on state to an off state, and after a second time period, switch the auxiliary switching transistor to an on state, to allow a current passing through a reverse excitation loop to flow, and allow the first energy storage element to energize the transformer through reverse excitation via the reverse excitation loop, where the reverse excitation loop includes the first energy storage element, the primary-side winding, and the auxiliary switching transistor.

### BRIEF DESCRIPTION OF DRAWINGS

FIG. 1 is a diagram of a circuit structure of an active clamp circuit;
FIG. 2 is a diagram of signal control;
FIG. 3 is a diagram of signal control;
FIG. 4 is a diagram of a circuit structure of an active clamp circuit; and
FIG. 5 is a schematic flowchart of a control method.

### DESCRIPTION OF EMBODIMENTS

The following describes embodiments of the present invention with reference to the accompanying drawings in embodiments of the present invention. Terms used in embodiments of the present invention are merely intended to describe specific embodiments of the present invention, but not to limit the present invention.

The following describes embodiments of this application with reference to the accompanying drawings. It can be learned by a person of ordinary skill in the art that the technical solutions provided in embodiments of this application are also applicable to similar technical problems with development of technologies and emergence of a new scenario.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover non-exclusive inclusion, so that a process, a method, a system, a product, or a device that includes a series of units is not necessarily limited to the units, but may include other units that are not clearly listed or are inherent to the process, the method, the product, or the device.

The terms "substantially (substantially)", "about (about)", and the like used in this specification are approximation terms rather than degree terms, and are intended to take into account inherent deviations of measured values or calculated values that are known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

The following describes some concepts in this application.
(1) An adapter (Adapter) is an apparatus that has a voltage conversion function and that supplies power to an electronic device (also referred to as a terminal device), and is also referred to as a charging head (Charger), a switching power supply adapter (Switching Power Supply), a charger (Charger), or a power converter (Power Converter).
(2) A super charging adapter (Super Charger) is an adapter or a charger that can implement charging, and is an adapter that can implement fast charging for a device with a battery, for example, a mobile phone or a computer, to shorten charging time. Usually, the super charging adapter is also referred to as a super charger (Super Charger), a boosting charger, a fast charger, a rushing charger, or the like.
(3) A half bridge is an electrical topology structure in which two power switching transistors alternately operate in a switching power supply to implement power transmission. A primary switching bridge is also referred to as a primary transistor or a first switch. A secondary switching bridge is also referred to as a secondary transistor, a second switch, or the like.
(4) In the present invention, an asymmetric half bridge indicates that a duty cycle for turning on an upper bridge and a duty cycle for turning on a lower bridge are not 50% symmetrical.
(5) A controller IC is a control unit of a product, and implements waveform detection and action logic.
(6) A transformer is a component that is responsible for power transmission and voltage transformation in a switching power supply.
(7) An auxiliary winding is a winding that is not responsible for power transmission in a transformer, for example, a VCC winding.
(8) A primary-side winding is a winding that is placed on a primary side in a transformer and that is responsible for inputting a voltage and a current.
(9) A secondary-side winding is a winding that is placed on a secondary side in a transformer and that is responsible for outputting a voltage and a current.

To enable a person skilled in the art to better understand the solutions of this application, the following describes embodiments of this application with reference to the accompanying drawings in embodiments of this application.

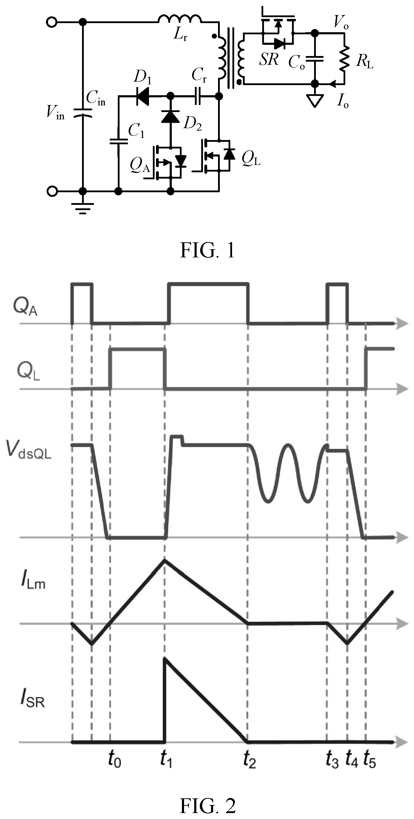

FIG. 1 is a diagram of an active clamp circuit.

As shown in FIG. 1, an embodiment of this application provides an active clamp circuit. The active clamp circuit is an active clamp flyback converter.

As shown in FIG. 1, the active clamp flyback converter includes a transformer T1, and the transformer T1 includes a primary-side winding Np and a secondary-side winding Ns. On an output side, namely, a secondary side, of the transformer T1, the active clamp flyback converter further includes an output voltage Vout (Vₒ for short in FIG. 1) for representing an output, a corresponding output capacitor Cout (Cₒ for short in FIG. 1), and a secondary-side synchronous rectifier (SR) connected in series to the secondary-side winding Ns. It should be understood that the SR may alternatively be replaced with another type of rectifier.

Because the windings of the transformer T1 cannot be ideally tightly bound, parasitic leakage inductance occurs. The parasitic leakage inductance of the transformer T1 is represented as an inductor Lr connected in series to the primary-side winding Np, and the inductor Lr should be understood as an inherent part of the primary-side winding Np. A movable point and a stationary point of each of the primary-side winding Np and the secondary-side winding Ns are merely intended for ease of description of a reference direction of an induced electromotive force of the primary-side winding Np or the secondary-side winding Ns, and should be understood as relative concepts. To be specific, one end at which the movable point of the primary-side winding Np or the secondary-side winding Ns is located is defined relative to another end at which the stationary point is located.

On an input side, namely, a primary side, of the transformer T1, the active clamp flyback converter further includes an input voltage source Vin for representing an input, a corresponding input capacitor Cin, and a flyback circuit. The clamp circuit and a primary power switching transistor Q_{L} are connected in parallel and then connected to the primary-side winding Np of the transformer T1.

Compared with a conventional flyback circuit, the active clamp circuit additionally includes a clamp switching transistor and a clamp capacitor. Before the primary power switching transistor is turned on, a current in a reverse direction flows through an excitation inductor. After the clamp switching transistor is turned off, a negative current of the excitation inductor enables a junction capacitor of the primary power switching transistor to discharge. When a voltage of the primary power switching transistor decreases to 0, the primary power switching transistor is turned on, to implement ZVS switching and reduce switching loss.

However, when the clamp switching transistor is on, because a voltage of the clamp capacitor is higher than a secondary-side reflected voltage of a transformer, a secondary-side SR is turned on, and energy of the clamp capacitor is transferred to an output side through the transformer, leading to a large current and large loss.

To resolve the foregoing problem, a flyback circuit is designed in embodiments of this application.

The clamp circuit includes a first energy storage element (for example, a capacitor Cr shown in FIG. 1), a first branch, and a second branch. The first branch and the second branch are connected in parallel and then connected in series to the first energy storage element. The first branch includes a second energy storage element (for example, a capacitor C1 shown in FIG. 1). The flyback circuit may be connected in parallel to two ends of the primary power switching transistor Q_{L}.

In a possible implementation, the first branch further includes a first diode D1, the first diode D1 is connected in series between the first energy storage element and the second energy storage element, an anode of the first diode D1 is connected to the first energy storage element, a cathode of the first diode D1 is connected to the second energy storage element, and the first diode D1 may block a reverse current relative to the first diode D1 from flowing to the first energy storage element.

In a possible implementation, the second branch includes an auxiliary switching transistor Q_{A} and a second diode D2, the second diode D2 is connected in series between the first energy storage element and the auxiliary switching transistor Q_{A}, an anode of the second diode D2 is connected to the auxiliary switching transistor Q_{A}, a cathode of the second diode D2 is connected to the first energy storage element, and the second diode D2 may block a reverse current relative to the second diode D2 from flowing to the auxiliary switching transistor Q_{A}.

In some example embodiments, the first diode D1 and the second diode D2 may be implemented by proper means in the conventional technology, for example, are point-contact, surface-contact, or planar diodes. These may be adjusted and modified based on a specific application environment, and are not specifically limited herein.

The auxiliary switching transistor is also referred to as an upper transistor Q_{A}, and the primary power switching transistor is also referred to as a lower transistor Q_{L}. Optionally, the auxiliary switching transistor Q_{A} and the primary power switching transistor Q_{L} are N-channel enhanced metal-oxide-semiconductor field-effect transistors (Metal-Oxide-Semiconductor Field-Effect Transistor, MOSFET), an anode of a parasitic body diode of each of the auxiliary switching transistor Q_{A} and the primary power switching transistor Q_{L} is connected to a corresponding source, and a cathode is connected to a corresponding drain. The input voltage source Vin is connected in series to the primary-side winding Np, and the primary power switching transistor Q_{L} is connected between the input voltage source Vin and the primary-side winding Np.

In a possible implementation, the first energy storage element and the second energy storage element are capacitors. For example, as shown in FIG. 1, the first energy storage element is the capacitor Cr, and the second energy storage element is the capacitor C1.

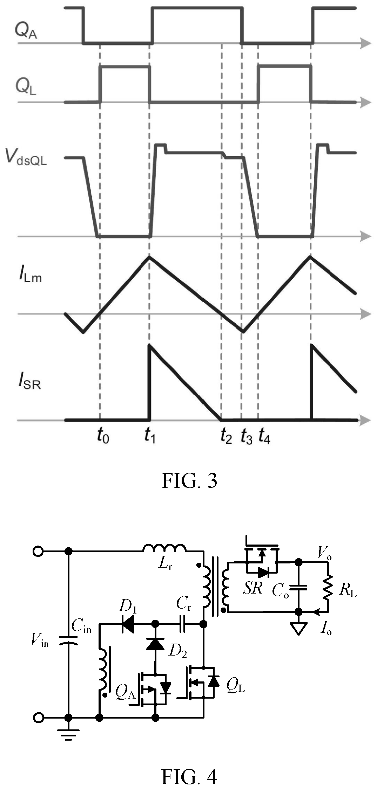

In a possible implementation, the first energy storage element is a capacitor, and the second energy storage element is a primary-side auxiliary winding. For example, as shown in FIG. 4, the first energy storage element is a capacitor Cr, and the second energy storage element is an auxiliary winding.

It should be understood that the first energy storage element and the second energy storage element may include one or more elements, and when there are a plurality of elements, types of the elements may be the same or different. This is not limited in embodiments of this application.

The active clamp flyback converter shown in FIG. 1 may be used for complementary active clamp flyback and non-complementary active clamp flyback based on control logic of the auxiliary switching transistor Q_{A} and the primary power switching transistor Q_{L}. The complementary active clamp flyback means that drive waveforms of upper primary power switching transistors are complementary, and there is dead time between the auxiliary switching transistor Q_{A} and the primary power switching transistor Q_{L}. The non-complementary active clamp flyback means that only a short-time pulse is enabled for the auxiliary switching transistor Q_{A}, so that the primary power switching transistor Q_{L} can implement zero voltage switching.

In an operating state, on/off of the primary power switching transistor and the auxiliary switching transistor may be controlled, to turn on a primary-side primary power loop. The primary power loop is described below.

In a possible implementation, the clamp circuit further includes a controller, the controller is connected to the primary power switching transistor and the auxiliary switching transistor, and the controller is configured to perform the following operations: switching the primary power switching transistor to an on state, and switching the auxiliary switching transistor to an off state, to allow a current passing through the primary power loop to flow, where the primary power loop includes the primary-side winding and the primary power switching transistor.

FIG. 2 is a diagram of a control signal for non-complementary active clamp flyback. When the primary power switching transistor and the auxiliary switching transistor are in an off state and a voltage between two ends of the primary power switching transistor decreases to 0, the primary power switching transistor is switched to an on state, to allow a current passing through the primary power loop to flow, where the primary power loop includes the primary-side winding and the primary power switching transistor. At a moment t₀, the primary power switching transistor Q_{L} is turned on, the auxiliary switching transistor Q_{A} is turned off, and the input voltage source Vin energizes the parasitic inductor Lr while energizing the primary-side winding Np of the transformer T1, that is, the input voltage source Vin excites an excitation inductor of the transformer T1. In this case, the active clamp flyback converter includes the primary power loop. In the primary power loop, by starting from the input voltage source Vin, an input voltage sequentially passes through the input voltage source Vin, the primary-side winding Np (including the parasitic inductor Lr), and the primary power switching transistor Q_{L}, and finally returns to the input voltage source Vin.

In an operating state, on/off of the primary power switching transistor and the auxiliary switching transistor may be controlled, to turn on a clamping loop of the flyback circuit. Descriptions are provided below.

In a possible implementation, after a first time period (for example, t1 in FIG. 2), the primary power switching transistor may be switched from the on state to an off state, and after dead time, the auxiliary switching transistor is switched from the off state to an on state, to allow a current passing through the clamping loop to flow, and allow the first energy storage element and the second energy storage element to absorb leakage inductance energy of the transformer through the clamping loop, where the clamping loop includes the primary-side winding, the first energy storage element, and the second energy storage element.

In a possible implementation, the controller may control the primary power switching transistor Q_{L} to be turned off and the auxiliary switching transistor Q_{A} to be turned on. Because the primary power switching transistor Q_{L} is turned off, the input voltage is removed. The secondary-side winding Ns of the transformer T1 generates a reverse output voltage at the primary-side winding Np to keep a magnetic flux unchanged. Specifically, energy stored in the transformer (including the parasitic inductor L1) is transmitted to an energy storage element (the first energy storage element and the second energy storage element) of the clamping loop for charging. In this case, the active clamp flyback converter includes the clamping loop. In the clamping loop, by starting from the primary-side winding Np, the reverse output voltage sequentially passes through a movable point of the primary-side winding Np, the first storage element (for example, the capacitor Cr shown in FIG. 1), the first diode D1, the second storage element (for example, the capacitor C1 shown in FIG. 1), and the input voltage source Vin, and finally returns to a stationary point of the primary-side winding Np.

When the clamping loop is turned on and the flyback circuit is in a forward charging state, the first energy storage element and the first branch conduct to form the clamping loop, and the first energy storage element and the second energy storage element absorb leakage inductance energy of the primary-side winding through the clamping loop. In this case, a clamping voltage of the primary switching transistor is a sum of voltages of the first energy storage element and the second energy storage element.

FIG. 2 is a diagram of a control signal for non-complementary active clamp flyback. At the moment t₁, an excitation current reaches a preset value, and the primary power switching transistor Q_{L} is turned off. After dead time elapses, the auxiliary switching transistor Q_{A} is turned on. In this case, a primary-side current of the transformer flows through the first energy storage element Cr and the second energy storage element C1, the two capacitors are connected in series, and a clamping voltage of the primary power switching transistor Q_{L} is a sum of voltages of the two capacitors.

In an operating state, on/off of the primary power switching transistor Q_{L} and the auxiliary switching transistor Q_{A} may be controlled, to turn on a reverse excitation loop of the flyback circuit. Descriptions are provided below.

In a possible implementation, when the clamp circuit is in a state of energizing the transformer through reverse excitation, the first energy storage element and the second branch conduct to form the reverse excitation loop.

In a possible implementation, the primary power switching transistor Q_{L} is switched to an off state, and the auxiliary switching transistor Q_{A} is switched to an on state, to allow a current passing through the reverse excitation loop to flow, and allow the first energy storage element to energize the transformer through reverse excitation via the reverse excitation loop (for example, at a moment t3 in FIG. 2, where a time period between a moment at which the auxiliary switching transistor enters an off state and a moment at which the auxiliary switching transistor enters the on state is a second time period). The reverse excitation loop includes the first energy storage element, the primary-side winding, and the auxiliary switching transistor Q_{A}.

FIG. 2 is a diagram of a control signal for non-complementary active clamp flyback. At the moment t₃, the auxiliary switching transistor Q_{A} is turned on, and the first energy storage element Cr performs reverse excitation on the excitation inductor to form a negative current. During forward charging of the clamp circuit, a voltage between two ends is a sum of voltages of the first energy storage element and the second energy storage element, and during discharging, a voltage between the two ends is only a voltage of the first energy storage element. During reverse excitation for the transformer, an excitation voltage is lower than a reflected voltage of the secondary-side winding, so that the secondary-side SR is not turned on. This eliminates forward excitation of energy to the secondary side, and therefore reduces loss.

In this way, the active clamp circuit ensures that an excitation voltage generated on the secondary side of the transformer and caused by energizing the transformer by a clamping element through reverse excitation does not cause a change in a reverse cut-off state of the secondary-side rectifier, and therefore does not cause a peak current to flow through the auxiliary switching transistor or the secondary-side rectifier. This effectively avoids forward transmission of excess energy to the secondary side of the transformer at a moment at which the auxiliary switching transistor is turned on.

Embodiments of this application are applicable to the following application scenarios: a low-power AC-DC power supply, a switching power supply with a requirement for high power density and high conversion efficiency, a miniaturized efficient power supply component, a consumer electronic product, and the like.

In a possible implementation, the controller is further configured to switch the primary power switching transistor to an on state based on a degree of energizing the transformer by the first energy storage element through reverse excitation, to implement zero voltage switching.

FIG. 2 is a diagram of a control signal for non-complementary active clamp flyback. At a moment t₄, after the auxiliary switching transistor Q_{A} is turned off, the negative current enables the junction capacitor of the primary power switching transistor Q_{L} to discharge. At a moment t₅, Vds of the primary power switching transistor Q_{L} decreases to 0, and the primary power switching transistor Q_{L} is turned on, to implement ZVS switching and reduce switching loss.

In addition, embodiments of this application may be further applied to complementary active clamp flyback. For example, FIG. 3 is a diagram of signal control in a critical conduction mode (critical conduction mode, CRM). As shown in FIG. 3, switching dead time is reserved for the primary power switching transistor Q_{L} and the auxiliary switching transistor Q_{A}, and the two switching transistors are turned on in a complementary mode. After an excitation current decreases to 0, the auxiliary switching transistor Q_{A} remains on, to perform reverse excitation on the excitation inductor, to form a negative current and create a condition for soft switching of the primary power switching transistor Q_{L} in a next stage.

In some example embodiments, a switching power supply includes the active clamp circuit shown in FIG. 1 and FIG. 3.

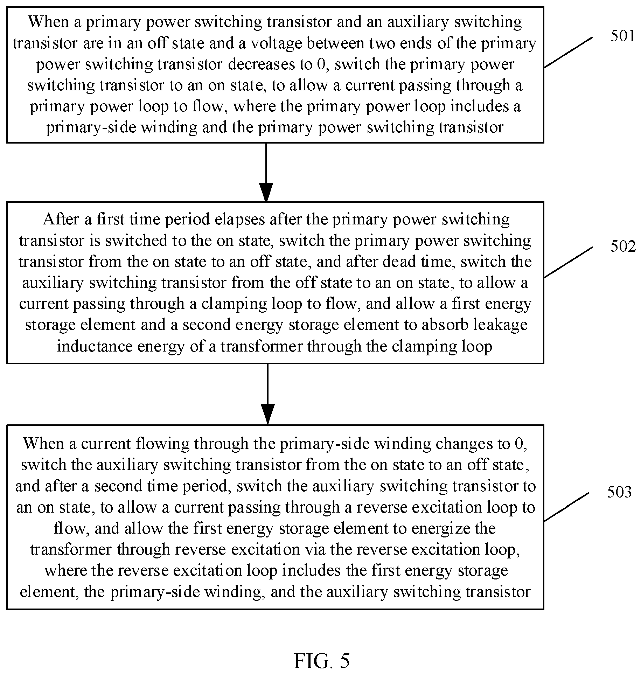

In addition, FIG. 5 is a schematic flowchart of a control method according to an embodiment of this application. The method may be applied to a controller in an active clamp circuit (for example, the circuit described in FIG. 1 or FIG. 4). The clamp circuit and a primary power switching transistor are connected in parallel and then connected to a primary-side winding of a transformer. The clamp circuit includes a first energy storage element, a first branch, and a second branch. The first branch and the second branch are connected in parallel and then connected in series to the first energy storage element. The first branch includes a second energy storage element, and the second branch includes an auxiliary switching transistor. The controller is connected to the primary power switching transistor and the auxiliary switching transistor.

The method includes the following steps.

501: When the primary power switching transistor and the auxiliary switching transistor are in an off state and a voltage between two ends of the primary power switching transistor decreases to 0, switch the primary power switching transistor to an on state, to allow a current passing through a primary power loop to flow, where the primary power loop includes the primary-side winding and the primary power switching transistor.

502: After a first time period elapses after the primary power switching transistor is switched to the on state, switch the primary power switching transistor from the on state to an off state, and after dead time, switch the auxiliary switching transistor from the off state to an on state, to allow a current passing through a clamping loop to flow, and allow the first energy storage element and the second energy storage element to absorb leakage inductance energy of the transformer through the clamping loop, where the clamping loop includes the primary-side winding, the first energy storage element, and the second energy storage element.

In a possible implementation, the controller may control the primary power switching transistor Q_{L} to be turned off and the auxiliary switching transistor Q_{A} to be turned on. Because the primary power switching transistor Q_{L} is turned off, an input voltage is removed. A secondary-side winding Ns of the transformer T1 generates a reverse output voltage at the primary-side winding Np to keep a magnetic flux unchanged. Specifically, energy stored in the transformer (including a parasitic inductor L1) is transmitted to an energy storage element (the first energy storage element and the second energy storage element) of the clamping loop for charging. In this case, an active clamp flyback converter includes the clamping loop. In the clamping loop, by starting from the primary-side winding Np, the reverse output voltage sequentially passes through a stationary point of the primary-side winding Np, the first storage element (for example, the capacitor Cr shown in FIG. 1), a first diode D1, the second storage element (for example, the capacitor C1 shown in FIG. 1), and an input voltage source Vin, and finally returns to a movable point of the primary-side winding Np.

When the clamping loop is turned on and a flyback circuit is in a forward charging state, the first energy storage element and the first branch conduct to form the clamping loop, and the first energy storage element and the second energy storage element absorb leakage inductance energy of the primary-side winding through the clamping loop. In this case, a clamping voltage of the primary switching transistor is a sum of voltages of the first energy storage element and the second energy storage element.

503: When a current flowing through the primary-side winding changes to 0, switch the auxiliary switching transistor from the on state to an off state, and after a second time period, switch the auxiliary switching transistor to an on state, to allow a current passing through a reverse excitation loop to flow, and allow the first energy storage element to energize the transformer through reverse excitation via the reverse excitation loop, where the reverse excitation loop includes the first energy storage element, the primary-side winding, and the auxiliary switching transistor.

In a possible implementation, the primary power switching transistor Q_{L} is switched to an off state, and the auxiliary switching transistor Q_{A} is switched to an on state, to allow a current passing through the reverse excitation loop to flow, and allow the first energy storage element to energize the transformer through reverse excitation via the reverse excitation loop, where the reverse excitation loop includes the first energy storage element, the primary-side winding, and the auxiliary switching transistor Q_{A}.

FIG. 2 is a diagram of a control signal for non-complementary active clamp flyback. At a moment t₃, the auxiliary switching transistor Q_{A} is turned on, and the first energy storage element Cr performs reverse excitation on an excitation inductor to form a negative current.

During forward charging of the clamp circuit, a voltage between two ends is a sum of voltages of the first energy storage element and the second energy storage element, and during discharging, a voltage between the two ends is only a voltage of the first energy storage element. During reverse excitation for the transformer, an excitation voltage is lower than a reflected voltage of the secondary-side winding, so that a secondary-side rectifier is not turned on. This eliminates forward excitation of energy to a secondary side, and therefore reduces loss.

In this way, the active clamp circuit ensures that an excitation voltage generated on the secondary side of the transformer and caused by energizing the transformer by a clamping element through reverse excitation does not cause a change in a reverse cut-off state of the secondary-side rectifier, and therefore does not cause a peak current to flow through the auxiliary switching transistor or the secondary-side rectifier. This effectively avoids forward transmission of excess energy to the secondary side of the transformer at a moment at which the auxiliary switching transistor is turned on.

In a possible implementation, the method further includes:
switching the primary power switching transistor to an on state, and switching the auxiliary switching transistor to an off state, to allow a current passing through a primary power loop to flow, where the primary power loop includes the primary-side winding and the primary power switching transistor.

In a possible implementation, the method further includes:
switching the primary power switching transistor to an on state based on a degree of energizing the transformer by the first energy storage element through reverse excitation, to implement zero voltage switching.

In a possible implementation, the first energy storage element is a capacitor, and the second energy storage element is a capacitor or a primary-side auxiliary winding.

In a possible implementation, when the clamp circuit is in a forward charging state, the first energy storage element and the first branch conduct to form a clamping loop, and the first energy storage element and the second energy storage element absorb leakage inductance energy of the primary-side winding through the clamping loop.

In a possible implementation, when the clamp circuit is in a state of energizing the transformer through reverse excitation, the first energy storage element and the second branch conduct to form a reverse excitation loop.

In a possible implementation, the first branch further includes a first diode, the first diode is connected in series between the first energy storage element and the second energy storage element, the second branch further includes a second diode, and the second diode is connected in series between the first energy storage element and the auxiliary switching transistor.

In a possible implementation, an anode of the first diode is connected to the first energy storage element, a cathode of the first diode is connected to the second energy storage element, and the first diode is configured to block a reverse current relative to the first diode from flowing to the first energy storage element.

In a possible implementation, an anode of the second diode is connected to the auxiliary switching transistor, a cathode of the second diode is connected to the first energy storage element, and the second diode is configured to block a reverse current relative to the second diode from flowing to the auxiliary switching transistor.

In a possible implementation, when the clamp circuit is in a forward charging state, a clamping voltage of the primary switching transistor is a sum of voltages of the first energy storage element and the second energy storage element.

Specific embodiments provided in this application may be implemented by any one or a combination of hardware, software, firmware, or a solid-state logic circuit, and may be implemented in combination with signal processing, control, and/or a dedicated circuit. A device or an apparatus provided in specific embodiments of this application may include one or more processors (for example, a microprocessor, a controller, a digital signal processor (DSP), an application-specific integrated circuit (ASIC), or a field programmable gate array (FPGA)), and the processors process various computer-executable instructions, to control an operation of the device or the apparatus. The device or the apparatus provided in specific embodiments of this application may include a system bus or a data transmission system that connects various components together. The system bus may include any one of different bus structures or a combination of different bus structures, for example, a memory bus or a memory controller, a peripheral bus, a universal serial bus, and/or a processor or a local bus in which any one of a plurality of bus architectures is used. The device or the apparatus provided in specific embodiments of this application may be independently provided, or may be a part of a system, or may be a part of another device or apparatus.

Specific embodiments provided in this application may include a computer-readable storage medium or may be combined with a computer-readable storage medium, for example, one or more storage devices that can provide non-transitory data storage. The computer-readable storage medium/storage device may be configured to store data, a program, and/or instructions. When the data, the program, and/or the instructions are executed by a processor of the device or the apparatus provided in specific embodiments of this application, the device or the apparatus is enabled to perform a related operation. The computer-readable storage medium/storage device may include one or more of the following features: a volatile feature, a nonvolatile feature, a dynamic feature, a static feature, a read/write feature, a read-only feature, a random access feature, a sequential access feature, location addressability, file addressability, and content addressability. In one or more example embodiments, the computer-readable storage medium/storage device may be integrated into the device or the apparatus provided in specific embodiments of this application, or belong to a common system. The computer-readable storage medium/storage device may include an optical storage device, a semiconductor storage device, a magnetic storage device, and/or the like, or may include a random access memory (RAM), a flash memory, a read-only memory (ROM), an erasable programmable read-only memory (EPROM), an electrically erasable programmable read-only memory (EEPROM), a register, a hard disk drive, a removable magnetic disk, a recordable and/or rewritable compact disc (CD), a digital versatile disc (DVD), a mass storage medium device, or a suitable storage medium in any other form.

The foregoing describes implementations of embodiments of this application. It should be noted that the steps in the method described in specific embodiments of this application may be adjusted, combined, and deleted according to an actual requirement. In the foregoing embodiments, the descriptions of the embodiments have respective focuses. For a part that is not described in detail in an embodiment, refer to related descriptions in other embodiments. It can be understood that the structures shown in embodiments of this application and the accompanying drawings do not constitute a specific limitation on a related apparatus or system. In some other embodiments of this application, the related apparatus or system may include more or fewer components than those shown in specific embodiments and the accompanying drawings, or some components may be combined, or some components may be split, or the components may be arranged differently. A person skilled in the art understands that various modifications or changes may be made to the arrangements, operations, and details of the method and device recorded in specific embodiments without departing from the spirit and scope of specific embodiments of this application. Several improvements and modifications may be further made without departing from the principle of embodiments of this application. The improvements and modifications are also regarded as falling within the protection scope of this application.

## Claims

1. An active clamp circuit, wherein the clamp circuit and a primary power switching transistor are connected in parallel and then connected to a primary-side winding of a transformer, and the clamp circuit comprises:
a first energy storage element, a first branch, and a second branch, wherein
the first branch and the second branch are connected in parallel and then connected in series to the first energy storage element;
the first branch comprises a second energy storage element, and the second branch comprises an auxiliary switching transistor;
the first energy storage element and the first branch conduct to form a clamping loop, and the first energy storage element and the second energy storage element absorb leakage inductance energy of the primary-side winding through the clamping loop after the primary power transistor is turned off; and
when the first energy storage element and the second branch conduct to form a reverse excitation loop, the first energy storage element discharges when the auxiliary switching transistor is turned on, to energize the transformer through reverse excitation.

2. The active clamp circuit according to claim 1, wherein the first branch further comprises a first diode, and the first diode is connected in series between the first energy storage element and the second energy storage element; and
the second branch further comprises a second diode, and the second diode is connected in series between the first energy storage element and the auxiliary switching transistor.

3. The active clamp circuit according to claim 2, wherein an anode of the first diode is connected to the first energy storage element, a cathode of the first diode is connected to the second energy storage element, and the first diode is configured to block the first energy storage element from releasing energy.

4. The active clamp circuit according to claim 2 or 3, wherein an anode of the second diode is connected to the auxiliary switching transistor, a cathode of the second diode is connected to the first energy storage element, and the second diode is configured to block the first energy storage element from storing energy.

5. The active clamp circuit according to any one of claims 1 to 4, wherein when the clamp circuit is in a forward clamping state, a clamping voltage of the primary switching transistor is a sum of voltages of the first energy storage element and the second energy storage element.

6. The active clamp circuit according to any one of claims 1 to 5, wherein the clamp circuit further comprises a controller, the controller is connected to the primary power switching transistor and the auxiliary switching transistor, and the controller is configured to sequentially perform the following operations:
when the primary power switching transistor and the auxiliary switching transistor are in an off state and a voltage between two ends of the primary power switching transistor decreases to 0, switching the primary power switching transistor to an on state, to allow a current passing through a primary power loop to flow, wherein the primary power loop comprises the primary-side winding and the primary power switching transistor;
after a first time period elapses after the primary power switching transistor is switched to the on state, switching the primary power switching transistor from the on state to an off state, and after dead time, switching the auxiliary switching transistor from the off state to an on state, to allow a current passing through a clamping loop to flow, and allow the first energy storage element and the second energy storage element to absorb leakage inductance energy of the transformer through the clamping loop, wherein the clamping loop comprises the primary-side winding, the first energy storage element, and the second energy storage element; and
when a current flowing through the primary-side winding changes to 0, switching the auxiliary switching transistor from the on state to an off state, and after a second time period, switching the auxiliary switching transistor to an on state, to allow a current passing through a reverse excitation loop to flow, and allow the first energy storage element to energize the transformer through reverse excitation via the reverse excitation loop, wherein the reverse excitation loop comprises the first energy storage element, the primary-side winding, and the auxiliary switching transistor.

7. The active clamp circuit according to claim 6, wherein the controller is further configured to:
switch the primary power switching transistor to an on state based on a degree of energizing the transformer by the first energy storage element through reverse excitation, to implement zero voltage switching.

8. The active clamp circuit according to any one of claims 1 to 7, wherein the first energy storage element is a capacitor, and the second energy storage element is a capacitor or a primary-side auxiliary winding.

9. A control method, applied to a controller in an active clamp circuit, wherein the clamp circuit and a primary power switching transistor are connected in parallel and then connected to a primary-side winding of a transformer, the clamp circuit comprises a first energy storage element, a first branch, and a second branch, the first branch and the second branch are connected in parallel and then connected in series to the first energy storage element, the first branch comprises a second energy storage element, the second branch comprises an auxiliary switching transistor, the controller is connected to the primary power switching transistor and the auxiliary switching transistor, and the method comprises:
when the primary power switching transistor and the auxiliary switching transistor are in an off state and a voltage between two ends of the primary power switching transistor decreases to 0, switching the primary power switching transistor to an on state, to allow a current passing through a primary power loop to flow, wherein the primary power loop comprises the primary-side winding and the primary power switching transistor;
after a first time period elapses after the primary power switching transistor is switched to the on state, switching the primary power switching transistor from the on state to an off state, and after dead time, switching the auxiliary switching transistor from the off state to an on state, to allow a current passing through a clamping loop to flow, and allow the first energy storage element and the second energy storage element to absorb leakage inductance energy of the transformer through the clamping loop, wherein the clamping loop comprises the primary-side winding, the first energy storage element, and the second energy storage element; and
when a current flowing through the primary-side winding changes to 0, switching the auxiliary switching transistor from the on state to an off state, and after a second time period, switching the auxiliary switching transistor to an on state, to allow a current passing through a reverse excitation loop to flow, and allow the first energy storage element to energize the transformer through reverse excitation via the reverse excitation loop, wherein the reverse excitation loop comprises the first energy storage element, the primary-side winding, and the auxiliary switching transistor.

10. An active clamp flyback converter, comprising:
the active clamp circuit according to any one of claims 1 to 8, and a transformer, wherein
the clamp circuit and a primary power switching transistor are connected in parallel and then connected to a primary-side winding of the transformer.

11. A switching power supply, wherein the switching power supply comprises the active clamp circuit according to any one of claims 1 to 8.
